# EUROPÄISCHE PATENTSCHRIFT

(11) **EP 0 504 493 B1**
(45) Veröffentlichungstag und Bekanntmachung des Hinweises auf die Patenterteilung: **07.12.1994**
(21) Anmeldenummer: 91122052.3
(22) Anmeldetag: 21.12.1991
(51) Int. Cl.: E04F 19/04, E04F 19/08, E04F 17/08, H02G 3/04, F16L 3/22

(54) **Installationskanal für Versorgungsleitungen**
Installation channel for supply lines
Canal d'installation pour lignes de distribution

(30) Priorität: 18.03.1991 DE 9103262 U
(43) Veröffentlichungstag der Anmeldung: 23.09.1992
(73) Patentinhaber: Hewing GmbH, D-48607 Ochtrup (DE)
(72) Erfinder: Olbrich, Kurt, W-6121 Mossautal-Hiltersklingen (DE)
(74) Vertreter: Busse & Busse Patentanwälte

(56) Entgegenhaltungen:
- DE-A- 2 016 834
- FR-A- 1 552 492
- GB-A- 999 829
- GB-A- 1 032 103
- GB-A- 1 562 566
- GB-A- 2 157 095

## Beschreibung

Die Erfindung betrifft einen Installationskanal für Versorgungsleitungen, insbesondere für Rohre, Kabel und dgl., nach dem Oberbegriff des Anspruchs 1.

Bei einem bekannten Installationskanal dieser Art (DE-A-20 16 834) sind als Stufenverbindungsmittel ausgebildete Verbindungsmittel vorgesehen, die einen in seiner horizontalen Innenabmessung in Abhängigkeit von der gewählten Verbindungsstufe veränderlichen Verlegekanal umgrenzen. Die Halteleiste weist dabei sich horizontal erstreckende, mit einer Rastzahnung versehene obere und untere Schenkel auf, auf die die Abdeckleiste mit entsprechenden Gegenschenkeln in einer horizontalen Bewegung aufsetzbar ist.

Bei einem anderen bekannten Installationskanal (DE-C 24 58 311) sind die Halteleiste und die Abdeckleiste mit oberen und unteren Verbindungsmitteln versehen, die in der Weise einen Schnappverschluß bilden, daß eine Riegelzunge der Abdeckleiste an einem oberen Widerlager eingehängt und danach eine untere Raste an der Abdeckleiste in eine entsprechende Gegenausformung eingeschwenkt wird, in der sie unter Druck einrastet. Der so gebildete, am Umfang geschlossene Verlegekanal hat eine einheitliche Innenabmessung für die Aufnahme selbst stark unterschiedlicher Rohrleitungen und damit ein einheitliches Erscheinungsbild.

Der Erfindung liegt die Aufgabe zugrunde, einen raumsparenden und optisch gefälligen Installationskanal der eingangs genannten Art mit einem veränderlichen Verlegekanal für Versorgungsleitungen zu schaffen, der in den Innenabmessungen mit geringem Aufwand variierbar ist.

Die Erfindung löst diese Aufgabe durch einen Installationskanal mit den Merkmalen des Anspruchs 1. Hinsichtlich wesentlicher weiterer Ausgestaltungsmerkmale wird auf die Ansprüche 2 bis 16 verwiesen.

Der erfindungsgemäße Installationskanal ist mit Verbindungsmitteln versehen, deren Aufbau eine variable Gestaltung des Verlegekanals zu dessen Anpassung an verschiedene Rohrdurchmesser ermöglicht. Die Stufenverbindungsmittel erlauben es dabei, den Verlegekanal mit geringem Aufwand in seinen Innenabmessungen zu variieren, so daß insgesamt ein raumsparender, optisch gefälliger Installationskanal für die Aufnahme verschiedenster Versorgungsleitungen geschaffen ist.

Hinsichtlich weiterer Vorteile und Einzelheiten wird auf die nachfolgende Beschreibung und die Zeichnung verwiesen, in der ein Ausführungsbeispiel des Gegenstandes der Erfindung schematisch näher veranschaulicht ist. In der Zeichnung zeigen:
- Fig. 1: eine perspektivische Ansicht eines erfindungsgemäßen Installationskanals in Betriebsstellung in teilweise geschnittener Darstellung,
- Fig. 2: einen Querschnitt durch eine erfindungsgemäße Abdeckleiste in Einzeldarstellung,
- Fig. 3: einen Querschnitt durch den erfindungsgemäßen Halteleiste in Einzeldarstellung,
- Fig. 4: einen Querschnitt durch den erfindungsgemäßen Installationskanal in Betriebsstellung gemäß Fig. 1,
- Fig. 5: eine Darstellung ähnlich Fig. 4 mit veränderter Verbindungsstufe für die Abdeckleiste,
- Fig. 6: eine Prinzipdarstellung von Haltern für die Versorgungsleitungen in unterschiedlicher Einbaulage,
- Fig. 7: einen Halter gemäß Fig. 6 in Seitenansicht,
- Fig. 8: den Halter gemäß Fig. 7 in Rückansicht,
- Fig. 9: eine perspektivische Ansicht der Einbaulage des Halters gemäß Fig. 6, und
- Fig. 10: eine Einzeldarstellung einer Dichtlippe für die Abdeckleiste.

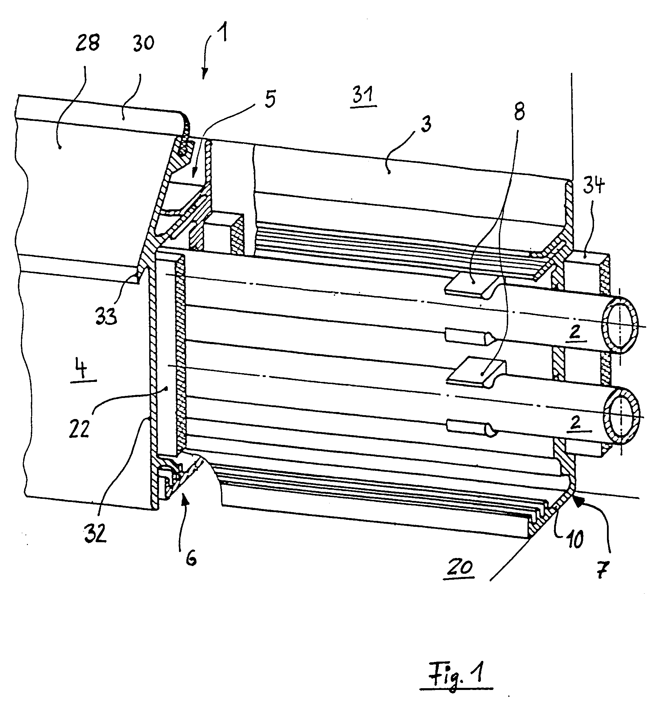

In Fig. 1 ist ein als ganzes mit 1 bezeichneter Installationskanal mit innenliegenden Versorgungsleitungen 2 dargestellt. Der Installationskanal 1 ist von einer Halteleiste 3 und einer Abdeckleiste 4 gebildet, wobei das obere Verbindungsmittel 5 und das untere Verbindungsmittel 6 derart in Verbindungseingriff gebracht sind, daß der Verlegekanal 7 einen geschlossenen Raum bildet. Im Verlegekanal 7 sind die Versorgungsleitungen 2 in Rohrhaltern 8 aufgenommen, die ihrerseits an der Halteleiste 3 festgelegt sind.

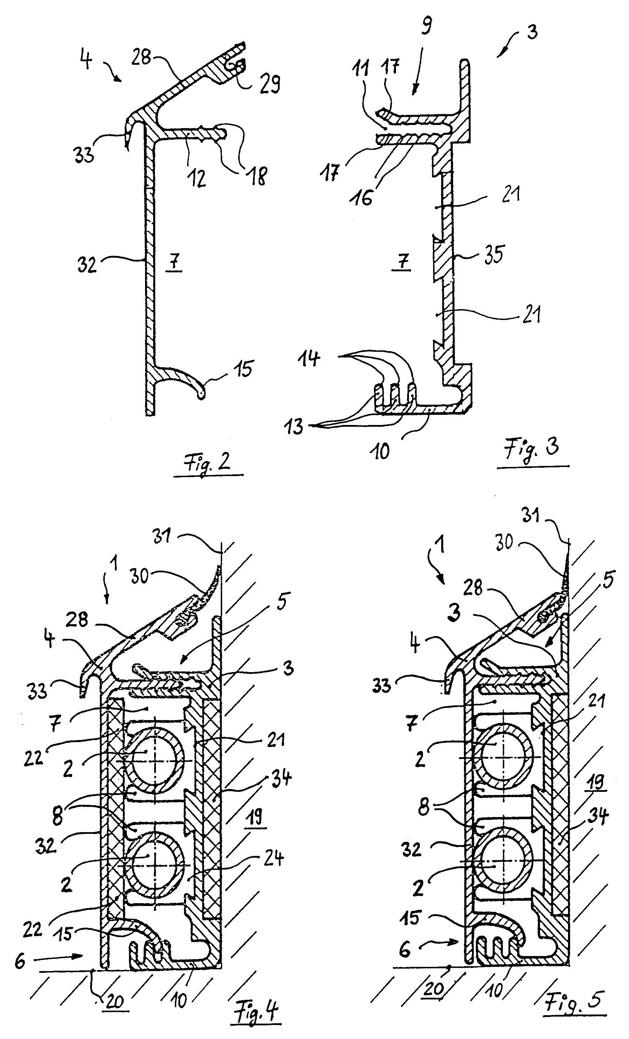

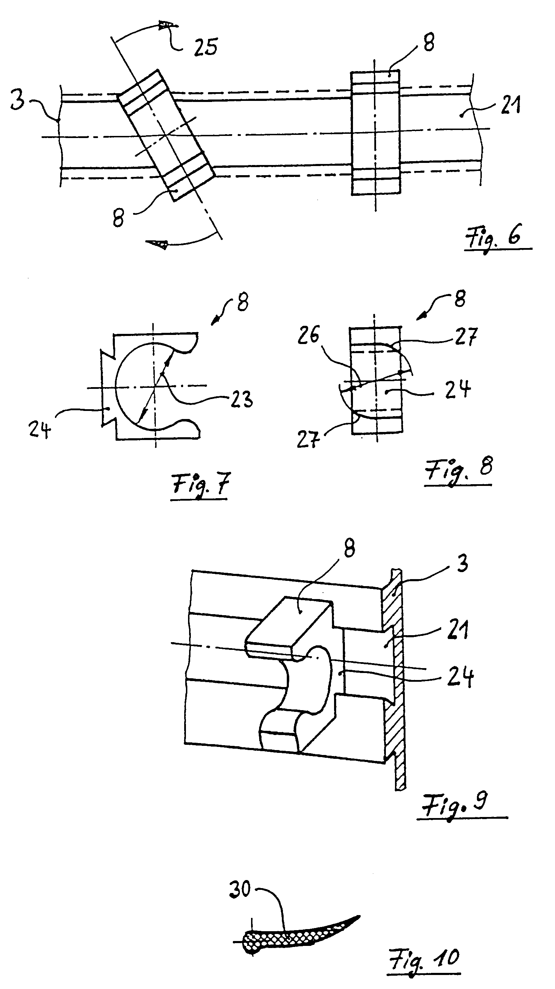

Die in Einzeldarstellung gemäß Fig. 3 näher veranschaulichte Halteleiste 3 ist als ein in Betriebsstellung (Fig. 1) einen horizontal ausgerichteten oberen Schenkel 9 und einen unteren Schenkel 10 darbietender U-Profilkörper ausgebildet. Der obere Schenkel 9 ist dabei als Doppelschenkel gestaltet, der eine horizontale Einsteckrasttasche 11 für einen oberen Raststeg 12 der Abdeckleiste 4 begrenzt (Fig. 2). Der untere Schenkel 10 der Halteleiste 3 weist in vorteilhafter Ausführungsform Riegelstege 13 auf, die oberseitig und längs des Schenkles 10 in horizontaler Richtung kammartig im Abstand hintereinander angeordnet sind. Die Riegelstege 13 weisen obere Randkanten 14 auf, hinter die eine untere Riegelzunge 15 der Abdeckleiste 4 in unterschiedlichen Verbindungsstufen der Verbindungsmittel 5,6 arretierend einhängbar ist.

Der obere Raststeg 12 ist als gerader Steg ausgebildet, der mit seinen Formvorsprüngen 18 in der Einsteckrasttasche 11 in Begrenzungsflächen 17 vorgesehene Formausnehmungen 16 eingreifen kann, so daß der Raststeg 12 der Abdeckleiste 4 mit seinen Formvorsprüngen 18 ebenfalls unterschiedliche Rastpositionen bzw. Verbindungsstufen einnehmen kann.

In Fig. 4 und 5 ist der Installationskanal 1 in Betriebsstellungen mit unterschiedlich gewählten Verbindungsstufen dargestellt. Die an einer Wand 19 und einem Boden 20 abgestützte Halteleiste 3 trägt die Halter 8 mit den Versorgungsleitungen 2 in übereinander angeordneten Rastnuten 21 (Fig. 6 und 9), wobei die Abdeckleiste 4 in der Ausführungsform gemäß Fig. 4 eine innere Dämmleiste 22 trägt. In dieser Verbindungsstellung der Abdeckleiste 4 sind sowohl die oberen Verbindungsmittel 5 als auch die unteren Verbindungsmittel 6 in einer zur Wand 19 weiter beabstandeten Verbindungsstellung positioniert, als dies bei der Ausführung nach Fig. 5 der Fall ist.

In der Ausführungsform gemäß Fig. 5, bei der die Versorgungsleitungen 2 beispielsweise eine geringe Wärmeisolierung erfordern, sind die Verbindungsmittel 5, 6 in der hintersten Verbindungsstufe eingerastet, so daß die Innenabmessung des Verlegekanals 7 auf eine minimale Größe reduziert ist.

Die in Fig. 6 bis 9 näher veranschaulichten Rohrhalter 8 haben an verschiedene Durchmesser der Versorgungsleitungen 2 angepaßte Innendurchmesser 23 und können mit ihren schwalbenschwanzförmig ausgebildeten Verriegelungsansätzen 24 mit einer in Fig. 6 dargestellten Drehbewegung 25 mit der Halteleiste 3 verbunden werden. Die Rohrhalter 8 sind in den Rastnuten 21 der Halteleiste 3 horizontal verschiebbar. Sie sind auch mit geringem Aufwand ver- und entriegelbar. Dazu sind die Rohrhalter 8 an ihren rückseitigen Verriegelungsansätzen 24 als mit einen Radius 26 versehene Rastbögen 27 ausgebildet (Fig. 8).

Zur Verbesserung des optischen Gesamteindrucks des Installationskanals 1 ist die Abdeckleiste 4 in ihrem sichtbaren oberen Bereich mit einem zur wandseitigen Anlagefläche 31 der Halteleiste 3 geneigten Decksegment 28 ausgebildet (Fig. 1). Dieses Decksegment 28 weist eine der Anlagefläche 31 zugewandte Formausnehmung 29 (Fig. 2) auf, in die eine vorstehende flexible Dichtlippe 30 (Fig. 10) eingebracht ist. Das Decksegment 28 ist dabei unter einem Winkel von 30° bis 90°, vorzugsweise 45°, zur Anlagefläche 31 der Wand 19 geneigt.

Die Deckleiste 4 weist im Übergangsbereich zwischen der vertikalen Außenseite 32 und dem Decksegment 28 eine vorstehende Abdecklippe 33 auf, die zweckmäßig einen vom Boden 20 bis in den Bereich der Außenseite 32 verlängerter Bodenbelag (nicht dargestellt) an seinem oberen Rand übergreift.

Zur Verbesserung der Wärmeisolierung des Installationskanals 1 beim Verlegen von z.B. Heizungsrohren können Dämmaterialien in Form der inneren Dämmleiste 22 und einer äußeren Dämmleiste 34 dem Verlegekanal 7 bzw. einer wandseitigen Nut 35 der Halteleiste 3 zugeordnet sein. In zweckmäßiger Ausführungsform ist das Dämmaterial von aufgeklebten Streifen, z.B. aus Polyethylen, Polystyrol, Polyurethan, gebildet, so daß der Installationskanal 1 an unterschiedliche Wärmeisolierforderungen anpaßbar ist. Der Aufwand kann weiter verringert werden, in dem das Dämmaterial (22;34) als eine mit der Halteleiste (3) und/oder der Abdeckleiste (4) koextrudierte Schicht, z.B. aus Integralschaum, ausgebildet ist.

## Patentansprüche

1. Installationskanal für Versorgungsleitungen, insbesondere für Rohre, Kabel und dgl., die mit einer wandseitigen Halteleiste (3) sowie einer daran befestigbaren Abdeckleiste (4) einen am Umfang geschlossenen Verlegekanal (7) bildet, wobei zur Verbindung der Halte- und der Abdeckleiste (3,4) obere und untere, als Stufenverbindungsmittel ausgebildete Verbindungsmittel (5,6) vorgesehen sind, die einen in seiner horizontalen Innenabmessung in Abhängigkeit von der gewählten Verbindungsstufe veränderlichen Verlegekanal (7) umgrenzen und wobei die Halteleiste (3) als ein Profilkörper mit in horizontaler oder vertikaler Betriebsstellung senkrecht zur Wandfläche ausgerichteten Schenkeln (9,10) ausgebildet ist, von denen der obere Schenkel (9) als horizontale Raste (11) einen oberen Raststeg (12) begrenzt, **dadurch gekennzeichnet,** daß der untere Schenkel (10) oberseitig mit sich längserstreckenden kammartig im Abstand hintereinander angeordneten Riegelstegen (13) versehen ist, hinter deren oberen Randkanten (14) eine untere Riegelzunge (15) der Abdeckleiste (4) arretierend einhängbar ist, und daß der obere Schenkel (9) der Halteleiste (3) als Doppelschenkel ausgebildet ist, der eine horizontale Einsteckrasttasche (11) für den oberen Raststeg (12) der Abdeckleiste (4) bildet.

2. Installationskanal nach Anspruch 1, dadurch gekennzeichnet, daß der obere Raststeg (12) als gerader Steg ausgebildet ist.

3. Installationskanal nach Anspruch 1 oder 2, dadurch gekennzeichnet, daß die Raststufen von Formausnehmungen (16) in beiden Begrenzungsflächen (17) der Einstecktasche (11) und von beidseitigen Formvorsprüngen (18) am Raststeg (12) gebildet sind.

4. Installationskanal nach einem der Ansprüche 1 bis 3, dadurch gekennzeichnet, daß die untere Riegelzunge (15) als bogenförmiges Hakenteil ausgebildet ist.

5. Installationskanal nach einem der Ansprüche 1 bis 4, dadurch gekennzeichnet, daß innenseitig zwischen den Schenkeln (9,10) der Halteleiste (3) Rohrhalter (8) für die Versorgungsleitungen (2) formschlüssig in Rastnuten (21) festgelegt sind.

6. Installationskanal nach Anspruch 5, dadurch gekennzeichnet, daß die Rastnuten (21) schwalbenschwanzförmig ausgebildet und die Rohrhalter (8) mit ihren entsprechenden Verriegelungsansätzen (24) in die Rastnuten (21) mittels einer Drehbewegung (25) verriegelnd einsetzbar sind.

7. Installationskanal nach Anspruch 5 oder 6, dadurch gekennzeichnet, daß die Rohrhalter (8) in den Rastnuten (21) der Halteleiste (3) in Längsrichtung verschiebbar sind.

8. Installationskanal nach einem der Ansprüche 1 bis 7, dadurch gekennzeichnet, daß einstückig an der Abdeckleiste (4) ein oberes, zur wandseitigen Anlagefläche (31) für die Halteleiste (3) geneigtes Decksegment (28) angeformt ist.

9. Installationskanal nach Anspruch 8, dadurch gekennzeichnet, daß das Decksegment (28) eine der Anlagefläche (31) zugewandte Formausnehmung (29) aufweist, in die eine vorstehende flexible Dichtlippe (30) eingebracht ist.

10. Installationskanal nach Anspruch 8 oder 9, dadurch gekennzeichnet, daß das Decksegment (28) unter einem Winkel von 30° bis 90°, vorzugsweise 45°, zur Anlagefläche (31) der Wand (19) geneigt ist.

11. Installationskanal nach einem der Ansprüche 1 bis 10, dadurch gekennzeichnet, daß der Übergangsbereich zwischen der vertikalen Außenseite (32) der Abdeckleiste (4) und dem Decksegment (28) eine vorstehende Abdecklippe (33) für einen Bodenbelag aufweist.

12. Installationskanal nach einem der Ansprüche 1 bis 11, dadurch gekennzeichnet, daß dem Verlegekanal (7) im Bereich der Halteleiste (3) und der Abdeckleiste (4) wärmeisolierendes Dämmaterial (22;34) zugeordnet sind.

13. Installationskanal nach Anspruch 12, dadurch gekennzeichnet, daß ein Dämmaterial (34) in einer wandseitigen Nut (35) der Halteleiste (3) angeordnet ist.

14. Installationskanal nach Anspruch 12 oder 13, dadurch gekennzeichnet, daß Dämmaterial (22) im Verlegekanal (7) zwischen der Innenseite der Abdeckleiste (4) und dem Rohrhalter (8) angeordnet ist.

15. Installationskanal nach einem der Ansprüche 12 bis 14, dadurch gekennzeichnet, daß das Dämmaterial (22;34) aus aufgebrachten Streifen, z.B. aus Polyethylen, Polystyrol, Polyurethan besteht.

16. Installationskanal nach einem der Ansprüche 12 bis 15, dadurch gekennzeichnet, daß das Dämmaterial (22;34) als eine mit der Halteleiste (3) und/oder der Abdeckleiste (4) koextrudierte Schicht, z.B. aus Integralschaum, ausgebildet ist.

## Claims

1. An installation duct for supply conductors, particularly for pipes, cables and the like, comprising a supporting bar (3) on the wall side and a covering bar (4) adapted to be fixed to it, forming an installation duct (7) closed on its periphery, whereby to connect the supporting bar and the covering bar (3, 4) upper and lower connecting means (5, 6) are provided which are constructed as stepped connecting means and which define an installation duct (7) variable in its horizontal internal dimensions as a function of the connection step selected and whereby the supporting bar (3) is constructed as a profiled member having flanges (9, 10) which, in the horizontal or vertical working position, extend at right-angles to the wall surface and of which the upper flange (9) acts as a horizontal catch (11) to define an upper catch web (12), characterised in that the lower flange (10) is provided on its upper surface with longitudinally extending locking webs (13) disposed one behind another, like a comb, and behind the upper edges (14) of which it is possible to engage in locking fashion a lower locking tongue (15) of the covering bar (4) and in that the upper flange (9) of the supporting bar (3) is constructed as a double flange which forms a horizontal push-in pocket (11) to receive the upper catch web (12) on the covering bar (4).

2. An installation duct according to Claim 1, characterised in that the upper catch web (12) is constructed as a straight web.

3. An installation duct according to Claim 1 or 2, characterised in that the catch steps are formed by shaped recesses (16) in both boundary surfaces (17) of the push-in pocket (11) and by shaped projections (18) formed on both sides of the catch web (12).

4. An installation duct according to one of Claims 1 to 3, characterised in that the bottom locking tongue (15) is constructed as an arcuately curved hook part.

5. An installation duct according to one of Claims 1 to 4, characterised in that pipe holders (8) for the supply lines (2) are fixed in form-locking manner in grooves (21) on the inside between the flanges (9, 10) of the supporting bar (3).

6. An installation duct according to claim 5, characterised in that the grooves (21) are of dovetailed cross-section and in that the pipe supports (8) can have their corresponding locking projections (24) inserted in locking manner into the grooves (21) by a twisting movement (25).

7. An installation duct according to Claim 5 or 6, characterised in that the pipe supports (8) can be displaced in a longitudinal direction in the grooves (21) in the supporting bar (3).

8. An installation duct according to one of Claims 1 to 7, characterised in that integrally formed on the cover bar (4) is an upper covering segment (28) inclined towards the wall-side bearing surface (31) for the supporting bar (3).

9. An installation duct according to Claim 8, characterised in that the cover segment (28) comprises, facing the bearing surface (31), a shaped recess into which a projecting flexible sealing lip (30) is fitted.

10. An installation duct according to Claim 8 or 9, characterised in that the covering segment (28) is inclined at an angle of 30° to 90° and preferably 45° to the bearing surface (31) of the wall (19).

11. An installation duct according to one of Claims 1 to 10, characterised in that the transition zone between the vertical outside (32) of the cover bar (4) and the cover segment (28) has a projecting covering lip (33) for a floor covering.

12. An installation duct according to one of Claims 1 to 11, characterised in that heat insulating material (22, 34) is associated with the installation duct (7) in the region of the supporting bar (3) and the covering bar (4).

13. An installation duct according to Claim 12, characterised in that insulating material (34) is disposed in a groove (35) on the wall side of the supporting bar (3).

14. An installation duct according to Claim 12 or 13, characterised in that insulating material (22) is disposed in the installation duct (7) between the inside of the covering bar (4) and the pipe support (8).

15. An installation duct according to one of Claims 12 to 14, characterised in that the insulating material (22, 34) consists of applied strips, for example of polyethylene, polystyrene, polyurethane.

16. An installation duct according to one of Claims 12 to 15, characterised in that the insulating material (22, 34) is constructed as a coating, for example of integral foam, co-extruded with the supporting bar (3) and/or covering bar (4).

## Revendications

1. Canal d'installation pour conduites d'alimentation, en particulier pour tuyaux, câbles et éléments analogues qui, avec un bandeau de maintien (3) situé du côté du mur et un bandeau de recouvrement (4) pouvant y être fixé, forme un canal de pose (7) fermé à sa périphérie, avec, pour relier le bandeau de maintien (3) et le bandeau de recouvrement (4), des moyens d'assemblage supérieurs et inférieurs (5, 6) réalisés sous la forme de moyens de raccordement à plusieurs crans, qui délimitent un canal de pose (7) dont la cote intérieure horizontale peut être modifiée en fonction du cran d'assemblage choisi, et le bandeau de maintien (3) étant réalisé sous la forme d'un corps profilé ayant des ailes (9, 10) qui, en position de service horizontale ou verticale, sont orientées perpendiculairement à la surface du mur, l'aile supérieure (9) enserrant, en tant que moyen d'arrêt horizontal (11), une réglette à engrènement supérieure (12), caractérisé en ce que l'aile inférieure (10) est pourvue sur sa face supérieure de barrettes de verrouillage (13) longitudinales placées à un certain intervalle les unes des autres, à la façon d'un peigne, derrière les bords supérieurs (14) desquelles une languette de verrouillage (15) inférieure du bandeau de recouvrement (4) peut être accrochée avec effet d'arrêt, et en ce que l'aile supérieure (9) du bandeau de maintien (3) est réalisée en tant qu'aile double formant un logement horizontal (11) d'insertion pour engrènement, destiné à la réglette à engrènement (12) supérieure du bandeau de recouvrement (4).

2. Canal d'installation suivant la revendication 1, caractérisé en ce que la réglette à engrènement (12) supérieure est rectiligne.

3. Canal d'installation suivant la revendication 1 ou 2, caractérisé en ce que les crans d'arrêt sont constitués par des rainures (16) venues de moulage dans les deux surfaces de délimitation (17) du logement pour insertion (11) et par des saillies (18) venues de moulage sur les deux côtés de la réglette à engrènement (12).

4. Canal d'installation suivant l'une quelconque des revendications 1 à 3, caractérisé en ce que la languette de verrouillage inférieure (15) est réalisée sous la forme d'un crochet en forme d'arc de cercle.

5. Canal d'installation suivant l'une quelconque des revendications 1 à 4, caractérisé en ce que, du côté intérieur, entre les ailes (9, 10) du bandeau de maintien (3), des supports de tuyaux (8) destinés aux conduites d'alimentation (2) sont immobilisés par engagement positif dans des rainures (21) de verrouillage.

6. Canal d'installation suivant la revendication 5, caractérisé en ce que les rainures de verrouillage (21) sont en forme de queue-d'aronde et les supports de tuyaux (8) peuvent être insérés dans les rainures de verrouillage (21), par leurs talons de verrouillage (24) correspondants, de façon à s'y verrouiller au moyen d'un mouvement de rotation (25).

7. Canal d'installation suivant la revendication 5 ou 6, caractérisé en ce que les supports de tuyaux (8) peuvent être déplacés longitudinalement dans les rainures de verrouillage (21) du bandeau de maintien (3).

8. Canal d'installation suivant l'une quelconque des revendications 1 à 7, caractérisé en ce qu'un segment de recouvrement (28) supérieur, incliné vers la surface d'appui (31) du bandeau de maintien (3) située du côté du mur, est venu de moulage avec le bandeau de recouvrement (4).

9. Canal d'installation suivant la revendication 8, caractérisé en ce que le segment de recouvrement (28) présente un renfoncement (29) venu de moulage, tourné vers la surface d'appui (31) et dans lequel est logée une lèvre d'étanchéité souple (30) qui fait saillie.

10. Canal d'installation suivant la revendication 8 ou 9, caractérisé en ce que le segment de recouvrement (28) est incliné sous un angle de 30° à 90°, de préférence de 45°, par rapport à la surface d'appui (31) du mur (19).

11. Canal d'installation suivant l'une quelconque des revendications 1 à 10, caractérisé en ce que la zone de transition entre la face extérieure verticale (32) du bandeau de recouvrement (4) et le segment de recouvrement (28) présente une lèvre de recouvrement saillante (33) pour un revêtement de sol.

12. Canal d'installation suivant l'une quelconque des revendications 1 à 11, caractérisé en ce qu'un matériau d'isolation thermique (22, 34) garnit le canal de pose (7) dans la zone du bandeau de maintien (3) et du bandeau de recouvrement (4).

13. Canal d'installation suivant la revendication 12, caractérisé en ce qu'un matériau isolant (34) est placé dans un évidement (35), situé du côté du mur, du bandeau de maintien (3).

14. Canal d'installation suivant la revendication 12 ou 13, caractérisé en ce que du matériau isolant (22) est placé dans le canal de pose (7), entre la face intérieure du bandeau de recouvrement (4) et le support de tuyaux (8).

15. Canal d'installation suivant l'une quelconque des revendications 12 à 14, caractérisé en ce que le matériau isolant (22, 34) est constitué par des bandes, par exemple de polyéthylène, de polystyrène ou de polyuréthanne, appliquées sur la surface.

16. Canal d'installation suivant l'une quelconque des revendications 12 à 15, caractérisé en ce que le matériau isolant (22, 34) est constitué par une couche, par exemple de mousse structurale, coextrudée avec le bandeau de maintien (3) et/ou le bandeau de recouvrement (4).
